(19) Europäisches Patentamt
European Patent Office
Office européen des brevets

(11)     EP 2 881 890 B1

(12)     **EUROPEAN PATENT SPECIFICATION**

(45) Date of publication and mention
of the grant of the patent:
**18.07.2018   Bulletin 2018/29**

(51) Int Cl.:
*G01S 3/786* (2006.01)          *G06K 9/00* (2006.01)

(21) Application number: **14186414.0**

(22) Date of filing: **25.09.2014**

(54) **Monitoring motion using skeleton recording devices**

Überwachung der Bewegung mittels Skelettaufzeichnungsvorrichtungen

Surveillance de mouvement à l'aide de dispositifs d'enregistrement de squelette

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2013   IN 3837MU2013**

(43) Date of publication of application:
**10.06.2015   Bulletin 2015/24**

(73) Proprietor: **Tata Consultancy Services Limited Mumbai 400 021 (IN)**

(72) Inventors:
• **Banerjee, Rohan**
  **700156 Kolkata (IN)**
• **Sinha, Aniruddha**
  **700156 Kolkata (IN)**
• **Chakravarty, Kingshuk**
  **700156 Kolkata (IN)**

(74) Representative: **Heinze, Ekkehard et al Meissner Bolte Patentanwälte Rechtsanwälte Partnerschaft mbB Widenmayerstraße 47 80538 München (DE)**

(56) References cited:
• COLLINS R T: "Algorithms for cooperative multisensor surveillance", PROCEEDINGS OF THE IEEE, IEEE. NEW YORK, US, vol. 89, no. 10, 1 October 2001 (2001-10-01), pages 1456-1477, XP002342459, ISSN: 0018-9219, DOI: 10.1109/5.959341
• AVIK GHOSE ET AL: "Unobtrusive indoor surveillance of patients at home using multiple Kinect sensors", PROCEEDINGS OF THE 11TH ACM CONFERENCE ON EMBEDDED NETWORKED SENSOR SYSTEMS, SENSYS '13, 1 January 2013 (2013-01-01), pages 1-2, XP055187766, New York, New York, USA DOI: 10.1145/2517351.2517412 ISBN: 978-1-45-032027-6
• AVIK GHOSE ET AL: "UbiHeld - Ubiquitous Healthcare Monitoring System for Elderly and Chronic Patients", PROCEEDINGS OF THE 2013 ACM CONFERENCE ON PERVASIVE AND UBIQUITOUS COMPUTING ADJUNCT PUBLICATION, 1 January 2013 (2013-01-01), pages 1255-1264, XP055187770, DOI: 10.1145/2494091.2497331 ISBN: 978-1-45-032215-7
• DE SAN BERNABE A ET AL: "Entropy-aware cluster-based object tracking for camera Wireless Sensor Networks", INTELLIGENT ROBOTS AND SYSTEMS (IROS), 2012 IEEE/RSJ INTERNATIONAL CONFERENCE ON, IEEE, 7 October 2012 (2012-10-07), pages 3985-3992, XP032287651, DOI: 10.1109/IROS.2012.6385805 ISBN: 978-1-4673-1737-5

EP 2 881 890 B1

**Description**

TECHNICAL FIELD

The present subject matter relates, in general, to motion detection and, in particular, to a system and a method for monitoring motion using a plurality of skeleton recording devices.

BACKGROUND

Skeleton recording devices are generally used for detecting movement of human skeletons, particularly individuals. In recent years, skeleton recording devices are being used increasingly for different purposes, such as in indoor surveillance. Such detection plays a decisive role in scenarios, for example, monitoring elderly people, identifying people in high security areas, remote tracking, and the like. Among other uses, the skeleton recording devices are used for identification of individuals based on biometrics to distinguish individuals based on their physical and/or behavioral characteristics, such as gait. Various skeleton recording devices are employed to recognize an individual based on the individual's style of walking. The skeleton recording devices may detect the motion of human skeletons through infrared (IR) sensors, camera systems, radio frequency, magnetic sensors, and the like. Such a device is known from COLLINS R T: "Algorithms for cooperative multisensor surveillance", PROCEEDINGS OF THE IEEE, IEEE. NEW YORK, US, vol. 89, no. 10, 1 October 2001 (2001-10-01). However, said device does not reduce the chance of missing an event and does not optimise resource utilization. These problems are solved by a method according to claim 1, a system according to claim 10 and a computer-readable medium according to claim 13.

BRIEF DESCRIPTION OF THE DRAWINGS

The detailed description is described with reference to the accompanying figures. In the figures, the left-most digits of a reference number identifies the figure in which the reference number first appears. The same numbers are used throughout the figures to reference like features and components. Some embodiments of systems and methods in accordance with embodiments of the present subject matter are now described, by way of example only, and with reference to the accompanying figures, in which:

Figure 1 illustrates a network environment implementing a monitoring system, according to an embodiment of the present subject matter.

Figure 2(a) illustrates a flowchart depicting a triggering mechanism employed by the monitoring system, according to an embodiment of the present subject matter.

Figure 2(b) illustrates a flowchart depicting a compression technique of the monitoring system, according to an embodiment of the present subject matter.

Figure 2(c) illustrates a bit pattern of a transmitted data block, according to an embodiment of the present subject matter.

Figure 3(a) illustrates a graph indicating power consumption by two skeleton recording devices employed with the monitoring system, according to an embodiment of the present subject matter.

Figure 3(b) illustrates a graph indicating change in statistical properties of skeleton recording devices due to compression techniques employed by the monitoring system, according to an embodiment of the present subject matter.

Figure 3(c) depicts a graph indicating accuracy in identification of individuals due to compression technique employed by the monitoring system, according to an embodiment of the present subject matter.

DETAILED DESCRIPTION

Typically, skeleton recording devices are used for detecting a change in position of a human skeleton relative to its surroundings. Amongst other things, the skeleton recording devices may employ infrared (IR) sensors to determine movement of the human skeleton, such as a human skeleton. A skeleton recording device, such as a Kinect®, are used for recording features of the human skeleton. For example, in case of an individual, the Kinect® may track the individual over time to determine change in position of the individual. Further, the Kinect® is used to record skeleton joints of the individual. The skeleton joints may include head, shoulder centre, shoulder left, shoulder right, spine, and the like. Data recorded by the skeleton recording devices is further processed based on the requirements.

Generally, single skeleton recording device is used for detection and recording of data pertaining to a human skeleton. As the single skeleton recording device has limited viewing angle, natural movement pattern of the human skeleton may not be captured. Referring back to the example of the human skeleton, in case the human skeleton is partially or completely outside a Field Of View (FOV) of the Kinect®, the Kinect® based systems may fail to record data, such as skeleton joint data of the human skeleton. This may result in difficulty in capturing sufficient data of the human skeleton using a fixed Kinect®. In addition, when the surveillance area is huge, for example, when the Kinect® is deployed in a large hall, such as having a dimension of 20 x 20 sq.ft., the single Kinect® may be unable to cover the entire area and thus may nit be able to capture data pertaining to the human skeleton.

In the past, few attempts have been made in order to have a wider FOV. For example, a panoramic sensor for wide FOV may be used in the skeleton recording devices. However, the panoramic sensor does not facilitate in fine focusing due to their lower pixel density. Moreover, due to the wide FOV, a slight defocus can cause major negative impact in image quality of the panoramic sensor. To overcome the issues raised by the panoramic sensor, multiple skeleton recording devices may be deployed for recording data and tracking the human skeleton. Further, each of the multiple skeleton recording devices is connected to a processing device, such as a Kinect® controller to capture the data. However, the use of multiple skeleton recording devices may demand huge bandwidth while sending raw data from the skeleton recording devices to a server. Also, as surveillance systems are expected to operate 24 hours a day, overall power consumption of the surveillance system may increase by using multiple skeleton recording devices. In addition, installing multiple skeleton recording devices in close range may introduce infra red (IR) interference and may introduce noise in the human skeleton data, this may result in inaccuracies or errors in further processing of the human skeleton data, such as for identification of individuals.

In accordance with the present subject matter, a system and a method for monitoring motion using multiple skeleton recording devices is described. The system as described herein is a monitoring system. In an implementation of the present subject matter, multiple skeleton recording devices, such as Kinects®, are positioned, in an area of surveillance, in such a way that limitation of the FOV of a single Kinect® is compensated by other Kinects®. In other words, the Kinects® are placed in the area of surveillance with non-overlapping FOV such that the complete area of surveillance can be monitored. Further, the Kinects® are time synchronized with respect to a pre-defined time using a known Network Time Protocol (NTP). Therefore, in combination, the Kinects® provide a wider FOV. In an implementation, each Kinect® is connected to a monitoring system (also referred to as a Kinect® controller). Further, the monitoring system of a skeleton recording device may be connected to monitoring systems of other skeleton recording devices in the area of surveillance through wired or wireless network connections. Examples of such connections may include, but is not limited to, Ethernet and Wi-Fi.

In an implementation, each of the monitoring systems may ensure that the IR sensor of one skeleton recording device is turned ON at a time. For example, each skeleton recording device may be in a passive state or an active state. In the passive state, an IR sensor of the skeleton recording device is switched OFF, such as by the monitoring system associated with the skeleton recording device. The passive skeleton recording device thereafter waits for a signal from the monitoring system of an active skeleton recording device to become active. In the active state, the IR sensor of the skeleton recording device is turned ON and the IR sensor searches for an event to track an human skeleton, such as a human skeleton. The skeleton recording device for which the IR sensor is turned ON may be referred to as an active device ($ACT_{DEVICE}$). Further, the event may be understood as detection of an human skeleton in the FOV of the $ACT_{DEVICE}$. As mentioned above, when one skeleton recording device is active, the monitoring system of the $ACT_{DEVICE}$ may transmit a message to the remaining monitoring systems to switch ON and switch OFF the IR sensors of their respective skeleton recording devices in a round robin manner. These skeleton recording devices may be referred to as passive devices ($PASSV_{DEVICE}$).

Initially, all the skeleton recording devices may be assigned a weight based on their probability of detecting the human skeleton. When no human skeleton is detected, every skeleton recording device is activated for a short but fixed duration that is proportional to the weight assigned to the skeleton recording device, in the round robin manner. Further, the monitoring system may control every skeleton recording device by two Boolean variables 'Active' and 'Event'. The monitoring system may be configured to set values of the variables based on a state of the skeleton recording device. For example, when a skeleton recording device is activated, the monitoring system sets an 'Active' value to true and 'Event' value to false and may broadcast a message to other monitoring systems to set their 'Active' and 'Event' values to false, thereby indicating the IR sensors of other skeleton recording devices to remain off (in passive state). When the duration of the $ACT_{DEVICE}$ is over, the $ACT_{DEVICE}$ may switch state to passive by setting the 'Active' value to false and the monitoring system may activate the next skeleton recording device by sending a message. As the skeleton recording devices turn ON and OFF in a round robin manner, the chance of missing an event by all the skeleton recording devices reduces.

In a scenario, when the $ACT_{DEVICE}$ detects the human skeleton in its FOV, the monitoring system associated with the $ACT_{DEVICE}$ sets 'Event' value of all the skeleton recording devices to true and starts tracking the human skeleton until out of the FOV of the $ACT_{DEVICE}$. In this circumstance, all the $PASSV_{DEVICES}$ wait for an activation signal from the $ACT_{DEVICE}$. Further, the monitoring system associated with the $ACT_{DEVICE}$ may record the human skeleton data as well as track direction of traversal of the human skeleton by motion modeling techniques, such as Kalman filter. In an implementation, more than one human skeleton may be captured in the FOV of a Kinect®. The Kinect® may track each of the human skeletons in its FOV and extract skeleton data pertaining to the human skeletons. As may be appreciated, the present subject matter may employ other human motion modeling techniques, such as particle filtering techniques, for recording the skeleton data and tracking direction of the movement. When the human skeleton comes to an edge of the FOV of the $ACT_{DEVICE}$, the associated monitoring system predicts the next skeleton recording device using Kalman filtering and activates immediate next skeleton recording device ($PASSV_{DEVICE}$) according to the predicted direction of movement by sending a message. In case more than one human skeleton is detected in the FOV the $ACT_{DEVICE}$, the associated monitoring system broadcasts a message to one or more $PASSV_{DEVICE}$ in whose FOV the human skeletons are moving. When the human skeleton goes out of view of $ACT_{DEVICE}$, the $ACT_{DEVICE}$ becomes a part of the round robin, i.e., remaining Kinect® turn their IR cameras ON and OFF in the round robin manner. The above-described process goes on until an $ACT_{DEVICE}$ finds its event value to be false, i.e., no human skeleton is detected by the $ACT_{DEVICE}$. The monitoring system of the present subject matter activates/deactivates the skeleton recording devices without any data loss.

In an implementation, each monitoring system may extract the skeleton data of the one or more human skeletons that appears in the FOV of the skeleton recording device associated with the monitoring system. In an example, the monitoring system may extract 3-Dimensional skeleton information of each of the individuals in the form of one or more skeleton frames. The monitoring system may store the skeleton information in a memory thereof for later use. Further, when the skeleton recording devices are in an idle state or the skeleton recording devices' memory is full, their respective monitoring system transfers the skeleton data, captured by the associated skeleton recording devices, to a backend server. In another example, the monitoring systems may transfer the skeleton data, captured by the associated skeleton recording devices, to the backend server at regular intervals. The monitoring system employs a compression technique for compressing the raw skeleton data, before transferring to the backend server, as will be discussed later with reference to the figures. The compression technique facilitates in reducing utilization of bandwidth during transfer of the skeleton data.

In an implementation, the compressed data may be shared with the backend server for various applications. One such application may include identification of individuals based on the compressed skeleton data received from the Kinect® controllers. In this case, the backend server may be trained to extract 3D skeleton joint coordinates, i.e., x, y, and z coordinates, of a plurality of skeleton joints of each individual. In one implementation, the plurality of joints of each individual may include head, shoulder centre, shoulder left, shoulder right, spine, hand left, hand right, elbow right, elbow left, wrist right, wrist left, hip left, hip right, hip centre, knee right, knee left, foot left, foot right, ankle right, and ankle left. The identification server thereafter obtains the skeleton data and then linearly shifts the skeleton data obtained from the human skeleton, captured by one Kinect®, with respect to the skeleton data obtained from the human skeleton captured by another Kinect®, so that the skeleton data can be mapped into a single co-ordinate system. After the mapping is done, the backend server may merge all the controller-inputs in time-interleaved fashion.

Based on the skeleton data, the backend server detects one or more gait cycles of each of the individuals. As described earlier, the backend server maps the skeleton data into a single co-ordinate system, therefore, although each Kinect® captures skeleton of an individual, only one continuous walking pattern is detected for the individual. For each of the one or more gait cycles of each of the known individuals, the backend server may extract a plurality of gait features of the individual, from the skeleton data. Examples of the gait features that are extracted, in accordance with one implementation, include area related features, such as mean of area occupied by an upper body portion and mean of area occupied by a lower body portion of the individual. Further, the gait features may include angle related features, such as mean, standard deviation and maximum of angle of the upper left leg relative to the vertical axis, angle of the lower left leg relative to the upper left leg, and angle of the left ankle relative to horizontal axis, and mean, standard deviation and maximum of angle of the upper right leg relative to the vertical axis, angle of the lower right leg relative to the upper right leg, and angle of the right ankle relative to horizontal axis.

Accordingly, the present subject matter employs multiple skeleton recording devices that work together as an integrated system to broaden the coverage area of surveillance. Further, each skeleton recording device is associated with a monitoring system, such as a Kinect® controller. The monitoring systems may switch the IR sensors of different skeleton recording devices in a round robin manner for optimum resource utilization. The monitoring system may facilitate in reducing an average power consumption of the motion sensing devices and may ensure that there is no data loss caused. The IR sensors of different skeleton recording devices may capture raw skeleton data of an human skeleton when the human skeleton falls within the FOV of the active skeleton recording device. This raw skeleton data may be compressed by using time series compression mechanism for transferring to the backend server. The monitoring system may transfer the compressed data to the backend server at regular intervals to reduce bandwidth utilization.

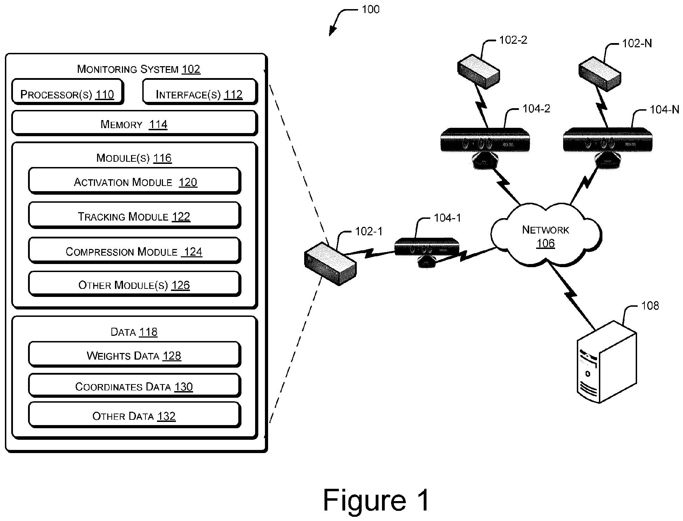

Figure 1 illustrates a network environment 100 implementing a monitoring system 102, in accordance with an embodiment of the present subject matter. In one implementation, the network environment 100 can be a public network environment, including thousands of personal computers, laptops, various servers, such as blade servers, and other computing devices. In another implementation, the network environment 100 can be a private network environment with a limited number of computing devices, such as personal computers, servers, and laptops.

The monitoring system 102 may be implemented in a variety of systems, such as a Kinect® controller, an edge processing device, and the like. Further, it will be understood that the monitoring system 102 is connected to a plurality of skeleton recording devices 104-1, 104-2,..., and 104-N, collectively referred to as skeleton recording devices 104 and individually referred to as a skeleton recording device 104. In an implementation, the skeleton recording device 104 may be a Kinect®. As shown in figure 1, the skeleton recording device 104 may be communicatively coupled to the monitoring system 102 over a network 106 through one or more communication links for facilitating one or more end users to access and operate the monitoring system 102.

In one implementation, the network 106 may be a wireless network, a wired network, or a combination thereof. The network 106 may also be an individual network or a collection of many such individual networks, interconnected with each other and functioning as a single large network, e.g., the Internet or the Intranet. The network 106 may be implemented as one of the different types of networks, such as the Intranet, local area network (LAN), wide area network (WAN), the Internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include a variety of network devices, including routers, bridges, servers, computing devices, storage devices, and the like.

It is to be understood that the specific skeleton recording devices 104 shown in the Figure 1 is only for the purpose of explanation. Any other conventionally known skeleton recording devices can be used for the purpose of recording data associated with the human skeletons without deviating from the scope of the invention. Further, the monitoring system 102 of the present subject matter is explained by considering the human skeletons as a human skeleton for identification of individuals, however, it may be evident to a person skilled in the art that the monitoring system 102 may be implemented in other applications. Further, the monitoring system 102 may be connected to a server 108, such as the backend server 108, through the network 106.

According to an implementation, the monitoring system 102 includes processor(s) 110, interface(s) 112, and memory 114 coupled to the processor(s) 110. The processor(s) 110 may be implemented as one or more microprocessors, microcomputers, microcontrollers, digital signal processors, central processing units, state machines, logic circuitries, and/or any devices that manipulate signals based on operational instructions. Among other capabilities, the processor(s) 110 may be configured to fetch and execute computer-readable instructions stored in the memory 114.

The memory 114 may include any computer-readable medium known in the art including, for example, volatile memory, such as static random access memory (SRAM), and dynamic random access memory (DRAM), and/or non-volatile memory, such as read only memory (ROM), erasable programmable ROM, flash memories, hard disks, optical disks, and magnetic tapes.

Further, the interface(s) 112 may include a variety of software and hardware interfaces, for example, interfaces for peripheral device(s), such as a product board, a mouse, an external memory, and a printer. Additionally, the interface(s) 112 may enable the monitoring system 102 to communicate with other devices, such as web servers and external repositories. The interface(s) 112 may also facilitate multiple communications within a wide variety of networks and protocol types, including wired networks, for example, LAN, cable, etc., and wireless networks, such as WLAN, cellular, or satellite. For the purpose, the interface(s) 114 may include one or more ports.

The monitoring system 102 also includes module(s) 116 and data 118. The module(s) 116 include, for example, an activation module 120, a tracking module 122, a compression module 124, and other module(s) 126. The other modules 126 may include programs or coded instructions that supplement applications or functions performed by the monitoring system 102. The data 118 may be weights data 128, coordinates data 130, and other data 132. The other data 132, amongst other things, may serve as a repository for storing data that is processed, received, or generated as a result of the execution of one or more modules in the module(s) 116.

In one implementation, the activation module 120 may toggle the skeleton recording devices 104 between an active state and a passive state. Further, the activation module 120 may define state of every skeleton recording device 104 by two Boolean variables 'Active' and 'Event'. The different states corresponding to the Boolean variables is shown in the below table. In an example, the skeleton recording devices 104, such as Kinects® may be placed side by side in a surveillance area with non overlapping FOV.

*Table 1*

| Active | Event | Kinect State |
|--------|-------|--------------|
| False | False | IR sensor off and no event detected |
| False | True | IR sensor off but event detected by another skeleton recording device |
| True | False | IR sensor on but no event detected |
| True | True | IR sensor on and an event detected by this skeleton recording device |

The skeleton recording device 104-1 in an active state may hereinafter be referred to as $ACT_{DEVICE}$ and the skeleton recording device 104-2 in the passive state may hereinafter be referred to as $PASSV_{DEVICE}$. In an implementation, the activation module 120 may detect presence of one or more human skeletons in an area of surveillance. In an implementation, the area of surveillance employs a plurality of skeleton recording devices 104 and the activation module 120 may detect presence of the one or more human skeletons in a field of view (FOV) of a first skeleton recording device 104. Based on the detection, the activation module 120 may turn ON the IR sensor of the $ACT_{DEVICE}$ and for tracking the one or more human skeletons. Further, the activation module 120 may send a notification to rest of the plurality of skeleton recording devices 104 to operate their respective IR sensors in the round robin manner. In an implementation, the activation module 120 may turn the IR sensor of $PASSV_{DEVICE}$ to ON and OFF and instruct the $PASSV_{DEVICE}$ to wait for signal from the $ACT_{DEVICE}$ or till a human skeleton is detected by any one of the $PASSV_{DEVICE}$.

Further, probability of all the skeleton recording devices 104 to detect the human skeleton is not the same. For example, for an indoor surveillance area, the skeleton recording device 104 located near a main entrance door holds the maximum probability to detect the human skeleton, such as the human skeleton, first with respect to the back door. Similarly, the skeleton recording devices 104 located in between front and back door hold probability values in between these two of detecting the human skeleton. Based on the probability of detecting the human skeleton first, the activation module 120 may assign a weight to each of the skeleton recording device 104. Further, the activation module 120 may store the weights as weights data 128. In an implementation, when no event is detected by the skeleton recording devices 104, the activation module 120 may activate each skeleton recording device 104 for a short but fixed duration. For example, the activation module 120 may activate a timer of each of the skeleton recording devices 104 to the duration that is proportional to the weight assigned to each of the skeleton recording devices 104.

In an implementation, upon activation, the activation module 120 may set the 'Active' value to TRUE and 'Event' value as FALSE. When one skeleton recording device 104 is activated, the monitoring system 102 associated with the $ACT_{DEVICE}$ 104 may set a timer of the $ACT_{DEVICE}$ to infinity. In other words, the timer of the skeleton recording device 104 may remain active as long as the human skeleton lies in the FOV of the $ACT_{DEVICE}$ 104. The activation module 120 may then broadcast a message to other skeleton recording devices 104 to notifying them to modify the states of the remaining skeleton recording devices 104 of 'Active' and 'Event' as FALSE, thereby indicating the other skeleton recording devices 104 to remain in the passive state. When the fixed duration is over, the activation module 120 may turn the $ACT_{DEVICE}$ to the passive state by setting its 'Active' value to FALSE. Further, the activation module 120 may activate the next skeleton recording device 104 by sending a unicast message. Accordingly, in the absence of any event, as the skeleton recording devices 104, such as Kinects®, turn ON and OFF in a round robin manner, the chance of missing an event by all the skeleton recording devices 104 is very less.

In an implementation, when any of the $ACT_{DEVICE}$ detects at least one human skeleton, the activation module 120 may set 'Event' value of all the skeleton recording devices 104 as TRUE. Further, the tracking module 122 may start tracking the human skeletons until it is visible. The tracking module 122 may record information as well as may track direction of the human skeleton movement. In an example, the skeleton recording device 104 may record skeleton information and track the human skeletons by human motion modeling using Kalman filter. Further, when any of the human skeletons come to one of the edges of the FOV of the $ACT_{DEVICE}$, the tracking module 122 may identify one or more second skeleton recording devices 104 based on a direction of traversal of the human skeletons. In an implementation, the tracking module 122 may track the human skeletons and when the human skeletons move from the FOV of the first skeleton recording device 104 to the FOV of the one or more second skeleton recording devices 104, the tracking module 122 may activate the next skeleton recording devices 104, i.e., $PASSV_{DEVICE}$ according to the predicted direction of movement by sending a message. Further, when the human skeletons goes out of view of $ACT_{DEVICE}$, the $ACT_{DEVICE}$ becomes passive, i.e., the 'Active' value is set to FALSE. This process goes on until the $ACT_{DEVICE}$ finds its event value to be false.

Considering an example when one human skeleton is detected by the skeleton recording device 104. In order to track a position of the human skeleton for the skeleton recording device 104, the tracking module 122 may confirm (x, y, z) coordinates of the human skeleton and its direction of movement. The tracking module 122 may store the coordinates of the human skeleton as coordinates data 130. The tracking module 122 may club this information together to form a state variable vector (*x*). The state variable vector (*x*) may indicate the movement of the human skeleton, in this case the human skeleton, in every frame so that the skeleton recording device 104 may be switched to another one when the human skeleton comes to the edge of the FOV. In an example, in case of detection of multiple human skeletons, another state variable may be formed by the tracking module 122 for clubbing information about each human skeleton. The IR sensor of the $ACT_{DEVICE}$ may also capture how far the human skeleton has travelled from its initial position. As raw data obtained from skeleton recording device 104 is noisy, the state variable vector may include a component of error. Further, the tracking module 122 may use a state estimation technique, such as Kalman filter, that considers the noise component for state estimation by integrating noisy measurements (uncertainty). Accordingly, for each of the human skeletons being tracked, the tracking module 122 may compute centroid of each human skeleton to form a single view world model in 3D world coordinate system. This spatiotemporal model represents x and y position and velocity of body centroid (i.e., a 4D state vector $(x,y,\dot{x},\dot{y})$) together with uncertainty measurement. The tracking module 122 may model transition relation for any human skeleton using equation (1):

$$x(t + \Delta t) = F(\Delta t).x(t) + |\Delta t|v(t) \qquad \ldots\ldots\ldots\ldots (1)$$

$$F(\Delta t) = \begin{pmatrix} 1 & 0 & \Delta t & 0 \\ 0 & 1 & 0 & \Delta t \\ 0 & 0 & 1 & 0 \\ 0 & 0 & 0 & 1 \end{pmatrix} \qquad \ldots\ldots\ldots\ldots (2)$$

where $\Delta t$ is the transitional time from the last updated position. $v(t)$ is Gaussian noise present in the measurement and given state vector estimate at time instance $t\text{-}\Delta t$, namely $\dot{x}(t\text{-}\Delta t|t\text{-}\Delta t)$ and measurement uncertainty factor M($t\text{-}\Delta t|t\text{-}\Delta t$), the predicted estimation of state vector and associated uncertainty for time instance t is given by:

$$\dot{x}(t|t - \Delta t) = F(\Delta t).\dot{x}(t - \Delta t|t - \Delta t)$$
$$M(t|t - \Delta t) = F(\Delta t)M(t - \Delta t|t - \Delta t)F^T(\Delta t) + |\Delta t|N_x(t) \qquad \ldots\ldots(3)$$

Now given an observation y(t), predicted state vector $\dot{x}(t|t\text{-}\Delta t)$ and associated uncertainties $M(t|t\text{-}\Delta t)$ and $N_y(t)$, the location of $\dot{x}(t|t\text{-}\Delta t)$ may be predicted by Kalman filter using equation 4, as

$$\dot{x}(t|t) = \dot{x}(t - \Delta t) + K(t)[y(t) - h(t,\dot{x}(t|t - \Delta t))]$$
$$M(t|t) = M(t - \Delta t) - K(t)H(t)M(t|t - \Delta t) \qquad \ldots\ldots\ldots\ldots (4)$$

Where h(t, x) is non linear. Further, Kalman gain is represented by equation (5):

$$K(t) = M(t - \Delta t)H^T(t)[H(t)M(t - \Delta t)H^T(t) + N_x(t)]^{-1} \qquad \ldots\ldots\ldots\ldots (5)$$

and

$$H(\Delta t) = \begin{pmatrix} \dfrac{\delta j}{\delta x} & \dfrac{\delta j}{\delta y} & 0 & 0 \\ \dfrac{\delta i}{\delta x} & \dfrac{\delta i}{\delta y} & 0 & 0 \end{pmatrix} \qquad (6)$$

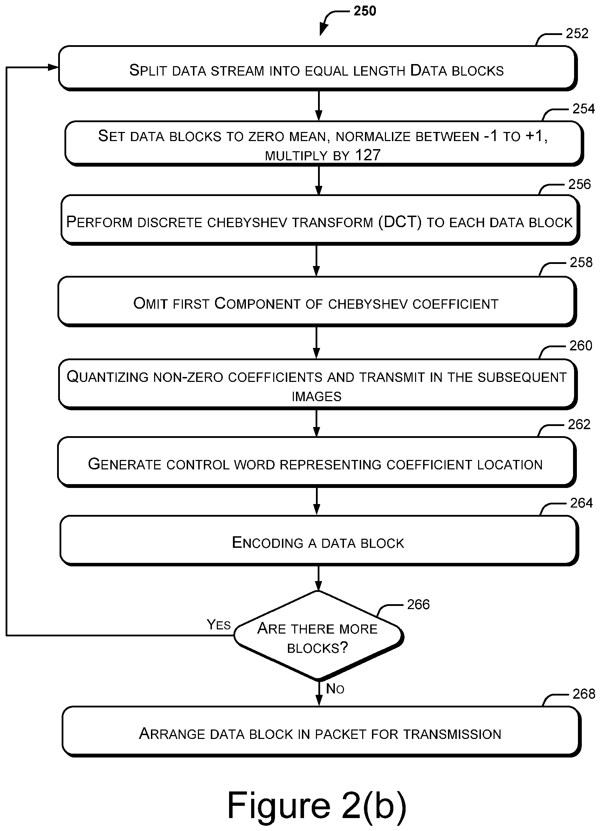

The tracking module 122 of the monitoring system 102 may receive human skeleton data pertaining to the human skeletons. In an implementation, the human skeleton data pertaining to plurality of joints of the human skeleton is tracked by each of the plurality of skeleton recording devices 104. In case of the human skeleton, a plurality of skeleton joints of the human skeleton may include head, shoulder, centre, shoulder left, shoulder right, spine, and the like. To effectively utilize the bandwidth between the skeleton recording devices 104 and the backend server 108, the compression module 124 may apply lossy compression technique. The lossy compression may be understood as a JPEG compression. The compression module 124 may apply the lossy compression technique to compress each of the x, y, z coordinates of the human skeleton joints. For example, the compression module 124 may apply the lossy compression technique to compress each of the 20 skeleton joints (total of 60 time series data) per skeleton. The compressed data may later be used for people identification. As this compression is lossy, the data length of the compressed data is lesser than a length of actual data. The lossy compression may therefore facilitate in reducing the bandwidth for transmitting the skeleton data to the backend server 108. The compression algorithm ensures that the statistical properties, such as mean and standard deviation, of the skeleton data are preserved after the skeleton data is compressed. The extent of the preservation of the statistical property is governed by the accuracy of the people identification. The different steps involved in the compression algorithm will be explained in conjunction with Figure 2(b).

In an implementation, the monitoring system 102 may thereafter share the human skeleton data with the backend server 108 for further processing. In an example, the backend server 108 may process the compressed data received from the monitoring system 102 for identification of the individual. In this case, the backend server 108 may be trained for identifying individuals. During training, the backend server 108 may receive an input from a user, say an administrator. The input may include a total number of individuals and their respective unique identifiers. In one example, a unique identifier of an individual may be a contact number, date of birth, and the like. According to an example, the user may provide a list of the individuals and their respective unique identifiers to the backend server 108 in a specific order.

For identifying the individuals, the backend server 108 may receive compressed data from all monitoring systems 102. Thereafter, the backend server 108 may extract 3D skeleton joint coordinates and aggregate the 3D skeleton joint coordinates in accordance with timestamps associated with the 3D skeleton joint coordinates received from each of the monitoring systems 102. In an implementation, the timestamp information contains the time when the human skeleton gets first detected in a skeleton recording device 104. As mentioned earlier, the backend server 108 may aggregate the 3D skeleton joint coordinates in time interleaving mode. The aggregation of the 3D skeleton joint coordinates may facilitate in obtaining a complete gait cycle that may be captured partially by two skeleton recording devices 104.

Accordingly, the monitoring system 102 may interact with multiple skeleton recording devices 104 that work together as an integrated system to broaden the coverage area of surveillance. Further, each skeleton recording device 104 is associated with a monitoring system 102, such as a Kinect® controller. The monitoring system 102 may use Kalman filtering for switching ON and OFF the IR sensors of different skeleton recording devices 104 for optimum resource utilization. The triggering mechanism facilitates in reducing average power consumption of the monitoring systems 102 and ensures that there is no data loss caused. The IR sensors of different skeleton recording devices 104 may capture raw human skeleton data of one or more human skeletons, when the human skeletons fall within the FOV of the $ACT_{DEVICE}$. This raw skeleton data may be compressed by using a time series compression mechanism for transferring to the backend server 108. The compression mechanism facilitates in preserving the statistical properties, such as mean and standard deviation, of the skeleton data. The monitoring system 102 may transfer the compressed data to the backend server 108 at regular intervals to reduce bandwidth utilization.

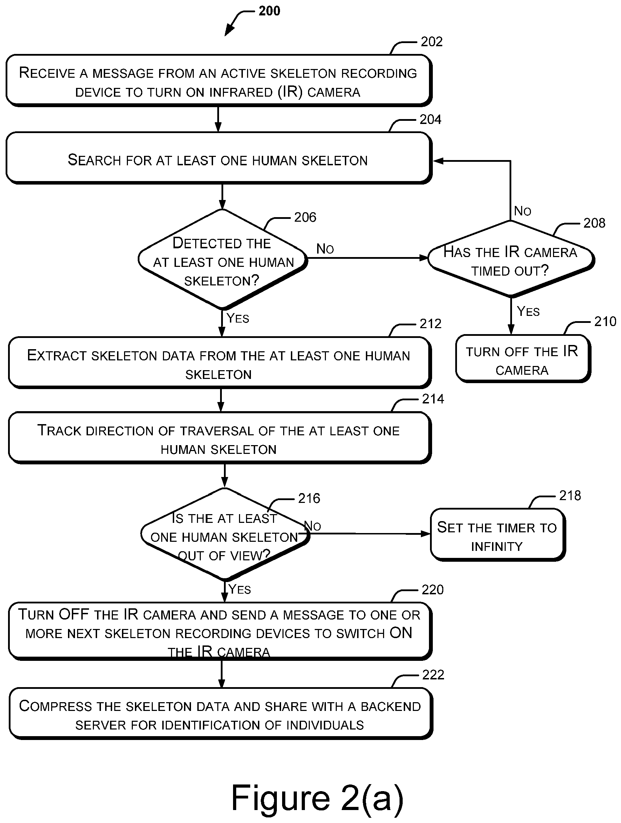

Fig. 2(a) illustrates a flowchart depicting a method 200 employed by the monitoring system 102 for monitoring multiple skeleton recording devices 104, according to an embodiment of the present subject matter. Fig. 2(b) illustrates a flowchart depicting a method 250 employed by the monitoring system 102 for compressing data, in accordance with an embodiment of the present subject matter. The methods 200 and 250 may be described in the general context of computer executable instructions. Generally, computer executable instructions can include routines, programs, human skeletons, components, data structures, procedures, modules, functions, etc., that perform particular functions or implement particular abstract data types. The methods 200 and 250 may also be practiced in a distributed computing environment where functions are performed by remote processing devices that are linked through a communications network. In a distributed computing environment, computer executable instructions may be located in both local and remote computer storage media, including memory storage devices.

The methods 200 and 250 can be implemented in any suitable hardware, software, firmware, or combination thereof.

Referring to Figure 2(a), at block 202, the method 200 may include receiving a message from an active skeleton recording device ($ACT_{DEVICE}$) 104, such as a Kinect®, to turn on an Infrared (IR) sensor thereof. In an implementation, the activation module 120 of the active skeleton recording device 104 may send the message to a passive skeleton recording device ($PASSV_{DEVICE}$). The activation module 120 may switch multiple skeleton recording devices 104 between an active state and a passive state to reduce overall power consumption by the skeleton recording devices 104. As may be understood, the message may be received by the $PASSV_{DEVICE}$, to become the $ACT_{DEVICE}$.

At block 204, the method 200 may include determining occurrence of an event. The event may be understood as detecting presence of one or more human skeleton in the FOV of a first skeleton recording device 104 (also referred interchangeable as the $ACT_{DEVICE}$). In an implementation, the $ACT_{DEVICE}$ may search in its FOV for the one or more human skeletons. Once a human skeleton is detected within the FOV of the $ACT_{DEVICE}$, the $ACT_{DEVICE}$ may extract information from the human skeleton.

At block 206, the method 200 may include determining whether the human skeleton was detected by the ACT$_{DEVICE}$ or not. If not, the method 200 moves to block 208. If at least one human skeleton is identified, the method 200 moves to block 212.

At block 208, the method 200 may include identifying whether the IR sensor of the ACT$_{DEVICE}$ has timed out or not. In an implementation, if no human skeleton is detected, the IR sensors of the ACT$_{DEVICE}$ may turn OFF after a fixed duration of time as may be defined through the activation module 120. If the IR sensor of the ACT$_{DEVICE}$ has not timed out, the method 200 goes back to block 204 for detecting the human skeleton.

If the IR sensor of the ACT$_{DEVICE}$ has timed out without detecting the human skeleton, the method 200 moves to block 210. At block 210, the activation module 120 may turn OFF the IR sensor of the ACT$_{DEVICE}$, i.e., the ACT$_{DEVICE}$ now goes in an idle or passive state and a message may be sent to a PASSV$_{DEVICE}$ to turn on the IR sensors.

As shown in block 212, the method 200 may include extracting human skeleton data from the one or more human skeletons. The ACT$_{DEVICE}$ may store the human skeleton data for later reference. In an implementation, when the human skeletons are identified by the ACT$_{DEVICE}$, the activation module 120 may set the timer of the IR sensor to infinity.

Thereafter, at block 214, the method 200 may include tracking direction of traversal of the human skeletons. In an implementation, the tracking module 122 may track the direction of motion, such that the tracking module 122 may determine the next skeleton recording device 104 in whose FOV the human skeletons are moving.

At block 216, the method 200 may include determining if any of the human skeleton is out of view of the ACT$_{DEVICE}$ or not. In an implementation, the tracking module 122 may check whether any of the human skeletons has gone out of the FOV of the ACT$_{DEVICE}$ or not. If the human skeletons are not out of view, the method 200 may move to block 218.

At block 218, the method 200 may include setting the timer of the IR sensor of the ACT$_{DEVICE}$ to infinity. In an implementation, the tracking module 122 may set the timer to infinity to ensure that the IR sensor does not turn OFF when the human skeletons are within its FOV.

Further, if all of the human skeletons has moved out of view of the ACT$_{DEVICE}$, the method 200 may move to block 220. At block 220, the method 200 may include turning OFF the IR camera of the ACT$_{DEVICE}$. In an implementation, the tracking module 122 may turn OFF the IR sensors of the ACT$_{DEVICE}$ when all of the human skeletons move out of view of the ACT$_{DEVICE}$. Further, the tracking module 122 may send a message to one or more next skeleton recording devices 104 for activating corresponding IR camera.

At block 220, the method 200 may include compressing the human skeleton data and sharing with the backend server 108. In an implementation, the compression module 124 may compress the human skeleton data by using time series compression technique.

Referring to Figure 2(b) a flowchart 250 depicting a compression mechanism employed in the monitoring system 102 is illustrated, according to an embodiment of the present subject matter.

At block 252, the method 250 may include splitting an input data stream into equal length blocks. In an implementation, the compression module 124 may split the input data stream.

Further, at block 254, the method 250 may include shifting each block to zero mean, normalizing between -1 and +1, and multiplying with 127 for obtaining 8 bit signed representation.

As depicted in block 256, the method 250 may include performing Discrete Chebyshev Transform (DCT) on each block. In an implementation, the DCT may result in a set of numbers (c) called as Chebyshev coefficients, as indicated in equation 7, as:

$$C(i) = \frac{2}{N}\sum_{m=1}^{N} f_m T_{im} \quad \ldots\ldots\ldots\ldots\ldots\ldots\ (7)$$

Where c(i) is the $i^{th}$ Chebyshev coefficient of data block *f*. N is the length of the input data block and $T_{im}$ is a cosine lookup table. The DCT converts the time series data into spectral information so that the information exists in a quantitative form that can be manipulated for compression by the compression module 124.

At block 258, the method 250 may include omitting the first component of the Chebyshev coefficient. In an implementation, as the data block is set to zero mean, the first component of Chebyshev coefficient is always zero and therefore, the compression module 124 may omit the first component. For the remaining components, the compression module 124 may identify all Chebyshev coefficients whose absolute values are below a threshold (*Th*). For such components, the compression module 124 may set the coefficient value to zero.

$$c'(i) = c(i+1), |c(i+1)| > Th, \forall\ i = 1 \ldots \ldots N-1$$
$$= 0 \ for\ the\ rest \qquad \ldots\ldots\ldots\ldots\ldots\ldots\ldots\ldots (8)$$

As shown in block 260, the method 250 may include quantizing non-zero coefficients and transmitting in the subsequent images. In an implementation, the compression module 124 may quantize the non-zero coefficients by rounding mantissa and exponent of the binary form of retained coefficients with the sign bit and shifting the radix point to the leading '1'. The fraction part is rounded off upto first 3 bits. The quantized number is finally represented by placing four bits of the exponent, followed by the sign bit and the three bits of the fraction (a total of 8 bits).

At block 262, the method 250 may include generating a control word (*cw*) that represents location of the coefficients which are being transmitted. In an implementation, the compression module 124 may generate the *cw* for each data block as:

$$cw(k) = 0, if\ c'^{(k)} = 0, \forall\ k = 1 \ldots \ldots N-1$$
$$= 1\ otherwise \qquad \ldots\ldots\ldots\ldots\ldots\ldots\ldots (9)$$

Considering that the length of original control word be M. The compression module 124 may truncate the control word after its last '1'. Further, one more bit is saved from transmitting by removing the trailing '1' of the control word. Thus the number of transmitting coefficient is more than the length of truncated control word. In an implementation, a $log_2 M$ bits long length specifier represents the length of the truncated control word. For example, for a certain data block of length 16, let a 15 bit control word is '110100111000000'. Truncating after the last '1' control word becomes '110100111'. Again after truncating the trailing '1', it becomes '11010011'. Accordingly, the length of the final control word is 8 and the length specifier in 4 ($log_2 16$ = 4) bits is '1000'.

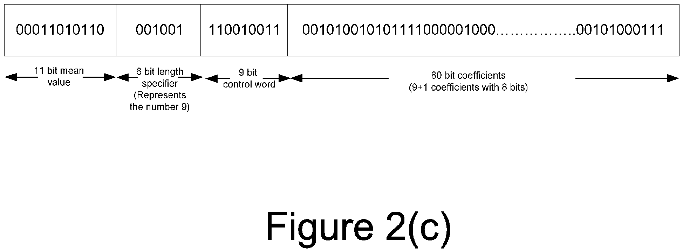

At block 264, a data block is encoded. In an implementation, the compression module 124 may encode the data block as depicted in Fig. 2(c). As shown in the figure, first 11 bits represent the mean of the data block, followed by 6 bit length specifier and the control word represented by length specifier. These are followed by the quantized coefficient.

Further, at block 266, the method 250 may include determining whether there are any data blocks left for encoding. If yes, the method 250 may move back to block 252 for repeating the above-mentioned process. If no, the method 250 may move to block 268.

At block 2686, the method 250 may include arranging data blocks in packets for transmission. In an implementation, the compression module 124 may arrange the data blocks together and may also append timestamp information to the data packet in 16 bit format.

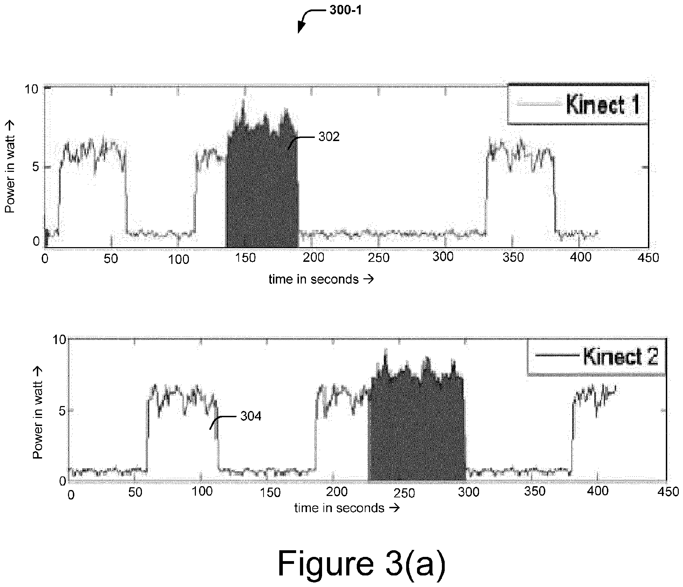

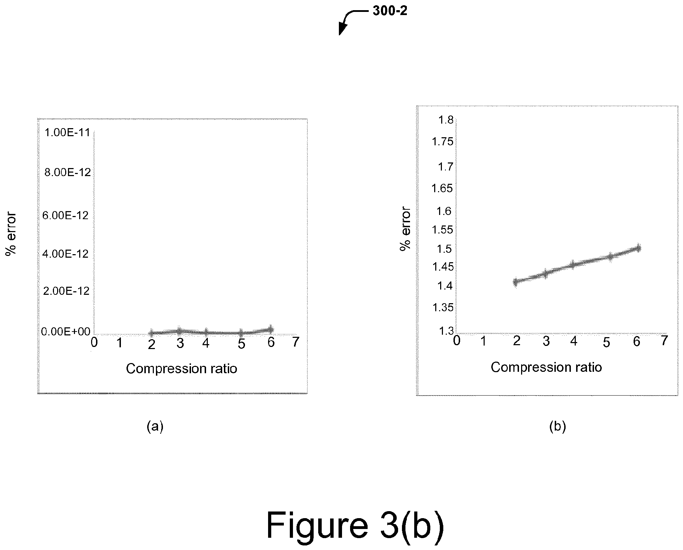

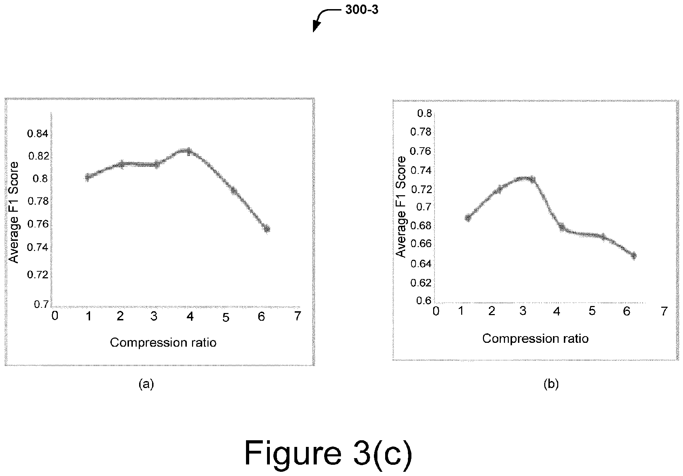

Referring to figures 3(a), 3(b), and 3(c), graphs 300-1, 300-2, and 300-3 indicating experimental results of the monitoring system 102 are illustrated, according to an embodiment of the present subject matter. Figure 3(a) illustrates the graph 300-1 indicating power consumption by two skeleton recording devices, such as skeleton recording device 104-1 and skeleton recording device 104-2 being employed in a surveillance area. The two skeleton recording devices 104 may be placed next to each other. As described with reference to Figure 1, the monitoring systems 102, such as the Kinect® controllers, associated with the motion sensing devices 104 incorporate the triggering mechanism to reduce power consumption by the skeleton recording devices 104. In an implementation, both skeleton recording devices 104 were set for the equal duration of their active states, i.e., 1 minute. In the present implementation, total duration of the test was set for around 7 minutes. An individual walks in front of the skeleton recording devices 104 during the test.

In an implementation, the monitoring system 102 may measure instantaneous power consumption of the skeleton recording devices 104. As indicated in the graph 300-1, instantaneous power drawn by the two skeleton recording devices 104 during the test. The shaded regions 302 in the graph 300-1 indicate the instances when the skeleton recording devices 104 are active and tracking a skeleton. Further, state of the skeleton recording devices 104 at different time interval during the test is indicated in the below table:

| Instance (seconds) | Skeleton recording device **1 status** | Skeleton recording device **2 status** |
|---|---|---|
| 0-5 | Delay to start the application | Delay to start the application |
| 6-65 | Active, but no human skeleton in view | Passive |
| 126-135 | Passive as time-out | Active, but no human skeleton in view |

(continued)

| Instance (seconds) | Skeleton recording device **1 status** | Skeleton recording device **2 status** |
|---|---|---|
| 136-190 | Active and tracking an human skeleton | Passive |
| 191-220 | Passive, as the human skeleton is out of view | Active, but no human skeleton in view yet |
| 221-305 | Passive | Human skeleton in view do remains active until it is visible |
| 306-320 | Data compression and posting to a backend server | Data compression and posting to a backend server |
| 321-380 | Active again but no human skeleton in view | Passive |
| 381-440 | Passive as time-out | Active, but no human skeleton in view |

As indicated in graph 300-1, the power consumption of the skeleton recording devices 104 reach their maximum values, such as upto 7.3 watt, when they are tracking the human skeleton and are very close to zero when the skeleton recording devices 104 are passive ($PASSV_{DEVICE}$). The skeleton recording devices 104 consume about 5.5 watt of power in average when the skeleton recording devices 104 are active but tracks nothing, as indicated by unshaded high amplitude regions 304. The maximum power consumption scenario occurs when one skeleton recording devices 104 is active and tracking an event, and the other skeleton recording devices 104 is passive. In such scenarios, the state of art systems, the power consumed by the two skeleton recording devices 104 can reach upto 13.1 Watts. The monitoring system 102 of the present subject matter facilitates the skeleton recording devices 104 to consume power of about 8.0 Watts, which is about 40% less than the conventional skeleton recording devices.

Figure 3(b) illustrates the graph 300-2 indicating change in statistical properties of the skeleton recording devices 104, such as skeleton recording device 104-1 and skeleton recording device 104-2 due to the compression mechanism employed by the monitoring system 102, according to an embodiment of the present subject matter. The graph 300-2 includes a sample time signal containing all 60 3D coordinate time series human skeleton data appended to each other for analyzing the change in its statistical properties due to compression. The percentage (%) error in mean and standard deviation between reconstructed data and original data for different threshold values (1 to 5) is plotted against compression ratio. The compression ratio may be indicative of the ratio of the bit length of the actual data to the compressed data.

As the monitoring system 102 of the present subject matter applies a lossy compression mechanism, the data length of the compressed data is lesser than the actual data. The lossy compression mechanism ensures that the statistical properties, such as mean and standard deviation, of the skeleton data is preserved after the compression. In an implementation, a threshold value is defined for the applied on the DCT coefficients of the input data block for selecting a part of coefficients for further transmission. The amount of data loss during compression is controlled by the threshold value (Th) as shown in equation (8). For example, a higher threshold value indicates more compression ratio, however higher threshold value degrades performance of the people identification in terms of accuracy. Hence the "Th" is chosen such that the extent of preservation of statistical properties of the compressed data enables in achieving the desired people identification accuracy. Accordingly, the compression ratio increases with increased threshold values. As may be seen from the graph 300-2, although the error in mean values is not affected much, the error in standard deviation increases with the increase in compression. At 6 times of compression, the error in standard deviation is close to 1.5%, accordingly the monitoring system 102 reduces error and brings effectiveness in the compression.

Referring to Figure 3(c), the graph 300-3 indicating accuracy in identification of individuals due to compression mechanism employed by the monitoring system 102 is depicted in accordance with an embodiment of the present subject matter. The accuracy in detection of an individual is tested on both raw skeleton data as well as on the compressed skeleton data for performance comparison. In an example, skeleton data is recorded for 10 individuals by aggregating two Kinects® in triggering mode. The performance evaluation in terms of recognition accuracy for different compression ratio is done based on the F1 score. The F1 score may be understood as a harmonic mean of precision (P) and the recall (R), and is represented as:

The graph 300-3 indicates average F1 score obtained in person detection against average compression ratio for different threshold values, ranging from 1 to 5, for 5 and 10 subjects respectively. In an implementation, compression ratio 1 indicates the data with no compression. An increase in threshold value subsequently increases the compression ratio. Without compression the recognition accuracy is around 0.7 for 10 persons, whereas due to compression, the accuracy varies between 0.66 to 0.72. As mentioned with reference to Fig. 2(b), the noisy data of Kinects® gets partially cleaned due to the quantization process of the compression mechanism.

Considering that the uncompressed skeleton data is D and the compressed skeleton data is $D_{comp}$ and P is the threshold value. Then difference in the mean values of the compressed skeleton data and the uncompressed skeleton data is given by:

Diff_mean = absolute(mean(D) - mean($D_{compressed}$)) ~ 0 (nearly equals to zero). Further, difference in standard deviation between the two values is represented by: Diff_std = absolute(std(D) - std($D_{compressed}$))~ 0 (nearly equals to zero). As there is less variation in the statistical properties, such as mean and standard deviation, in the compressed and the uncompressed skeleton data, the monitoring system 102 of the present subject matter preserves the statistical properties of the skeleton data and at the same time reduces bandwidth usage.

Although embodiments for methods and systems for monitoring motion using skeleton recording devices have been described in a language specific to structural features and/or methods, it is to be understood that the invention is not necessarily limited to the specific features or methods described. Rather, the specific features and methods are disclosed as exemplary embodiments for monitoring motion using skeleton recording devices.

**Claims**

1. A method for monitoring motion using a plurality of skeleton recording devices (104), the method comprising:

    detecting, by a processor (110) of a monitoring system (102), the presence of at least one human skeleton in a field of view (FOV) of a first skeleton recording device (104) from the plurality of recording devices (104), wherein each of the plurality of skeleton recording devices (104) is connected with a separate monitoring device (102) wherein each of the plurality of skeleton recording devices (104) are placed in an area of surveillance with non-overlapping field of view (FOV) monitoring the complete area of surveillance;
    tracking, by the processor (110), the at least one human skeleton within the FOV of the first skeleton recording device (104), wherein tracking includes determining a direction of traversal of the at least one human skeleton and extracting skeleton data pertaining to the at least one human skeleton tracked by the first skeleton recording device (104);
    transmitting, by the processor (110), a message to the rest of the plurality of skeleton recording devices (104), in case of absence of a human skeleton in the field of view of the first skeleton recording device (104) from the plurality of recording devices (104) to switch ON and OFF corresponding infrared (IR) sensors in a round robin manner;
    in case of detection of at least the one human skeleton coming to one of the edges of the field of view (FOV) of the first recording device (104); identifying, by the processor (110), one or more second skeleton recording devices (104) based on the direction of traversal of the at least one human skeleton from the FOV of the first skeleton recording device (104) to a FOV of the one or more second skeleton recording devices (104); and
    based on the identification, notifying, by the processor (110), the one or more second skeleton recording device (104) to activate corresponding infrared (IR) sensors.

2. The method as claimed in claim 1 further comprising:
    compressing, by the processor (110), the skeleton data of the skeleton recording device (104), wherein the compressed skeleton data is analyzed for identification of individuals.

3. The method as claimed in claim 2 further comprising transmitting, by the processor (110), the compressed skeleton data to a backend server (108), wherein the identification of individuals is performed at the backend server (108).

4. The method as claimed in claim 2, wherein the identification of individuals is performed at the monitoring system (102).

5. The method as claimed in claim 2, wherein the skeleton data is compressed by a lossy compression technique, wherein the lossy compression technique performs Discrete Chebyshev Transform (DCT) on the skeleton data and preserves statistical properties of the skeleton data for performing people identification with pre-defined accuracy.

6. The method as claimed in claim 2, wherein the identification of individuals comprises:

    retrieving three dimensional (3D) skeleton joint coordinates from the skeleton data;
    aggregating the 3D skeleton joint coordinates in accordance with timestamps in time interleaving mode for obtaining a natural walking pattern of an individual;
    extracting a plurality of gait features of the individual, for each of the one or more gait cycles, from the 3D skeleton joint coordinates on the skeleton data; and
    identifying the individual based on the plurality of gait features.

7. The method as claimed in claim 1, wherein each of the plurality of skeleton recording devices (104) is associated with a weight based on a probability of detection of the at least one human skeleton by each of the plurality of skeleton recording devices (104).

8. The method as claimed in claim 8, wherein each of the plurality of skeleton recording devices (104) remain active for a pre-defined time period in absence of the detection of the at least one human skeleton, and wherein the time period is defined in accordance to the weight assigned to each of the plurality of skeleton recording devices (104).

9. The method as claimed in claim 1, wherein the tracking of the at least one human skeleton is performed by a Kalman filter technique.

10. A monitoring system (102) comprising:

a processor (110);
an activation module (120), coupled to the processor (110), to,

detect presence of at least one human skeleton in a field of view (FOV) of a first skeleton recording device (104) from a plurality of skeleton recording devices (104) wherein each of the plurality of skeleton recording devices (104) is connected with a separate monitoring device (102) wherein each of the plurality of skeleton recording devices (104) are placed in an area of surveillance with non-overlapping field of view (FOV) monitoring the complete area of surveillance; and
transmitting, by the processor (110), a message to the rest of the plurality of skeleton recording devices (104), in case of absence of a human skeleton in the field of view of the first skeleton recording device (104) from the plurality of recording devices (104) to switch ON and OFF corresponding infrared (IR) sensors in a round robin manner

in case of detection of at least the one human skeleton coming to one of the edges of the field of view (FOV) of the first recording device (104);
a tracking module (122), coupled to the processor (110),to,

track the at least one human skeleton within the FOV of the first skeleton recording device (104), wherein the tracking includes determining a direction of traversal of the at least one human skeleton and extracting skeleton data pertaining to the at least one human skeleton tracked by the first skeleton recording device (104); and
identify, one or more second skeleton recording devices (104) based on the direction of traversal of the at least one human skeleton from the FOV of the first skeleton recording device (104) to a FOV of the one or more second skeleton recording devices (104); and

based on the identification, notify one or more second skeleton recording devices (104) to activate corresponding infrared (IR) sensors .

11. The monitoring system (102) as claimed in claim 11 further comprising a compression module (124), coupled to the processor (110), to, compress the skeleton data by utilizing a lossy compression technique; transmit the compressed data to a backend server (108) for identification of individuals.

12. The monitoring system (102) as claimed in claim 11, wherein each of the plurality of skeleton recording devices (104) remain active for a pre-defined time period in absence of the detection of the at least one human skeleton, and wherein the time period is defined in accordance to the weight assigned to each of the plurality of skeleton recording devices (104).

13. A non-transitory computer-readable medium having embodied thereon a computer program for executing a method comprising:

detecting, by a processor (110) of a monitoring system (102), the presence of at least one human skeleton in a field of view (FOV) of a first skeleton recording device (104) from a plurality of recording devices (104), wherein each of the plurality of skeleton recording devices (104) is connected with a separate monitoring device (102) wherein each of the plurality of skeleton recording devices (104) are placed in an area of surveillance with non-overlapping field of view (FOV) monitoring the complete area of surveillance;

tracking, by the processor (110), the at least one human skeleton within the FOV of the first skeleton recording device (104), wherein tracking includes determining a direction of traversal of the at least one human skeleton and extracting skeleton data pertaining to the at least one human skeleton tracked by the first skeleton recording device (104);

transmitting, by the processor (110), a message to the rest of the plurality of skeleton recording devices (104), in case of absence of a human skeleton in the field of view of the first skeleton recording device (104) from the plurality of recording devices (104) to switch ON and OFF corresponding infrared (IR) sensors in a round robin manner;

in case of detection of the at least one human skeleton coming to one of the edges of the field of view (FOV) of the first recording device (104)

identifying, by the processor (110), one or more second skeleton recording devices (104) based on a direction of traversal of the at least one human skeleton from the FOV of the first skeleton recording device (104) to a FOV of the one or more second skeleton recording devices (104); and

based on the identification, notifying, by the processor (110), the one or more second skeleton recording devices (104) to activate corresponding Infrared (IR) sensors.

## Patentansprüche

1. Verfahren zum Überwachen einer Bewegung unter Verwendung einer Vielzahl von Skelettaufzeichnungsvorrichtungen (104), wobei das Verfahren umfasst:

    Detektieren der Anwesenheit von mindestens einem menschlichen Skelett in einem Sichtfeld (FOV) einer ersten Skelettaufzeichnungsvorrichtung (104) aus der Vielzahl von Aufzeichnungsvorrichtungen (104) durch einen Prozessor (110) eines Überwachungssystems (102), wobei jede der Vielzahl von Skelettaufzeichnungsvorrichtungen (104) mit einer separaten Überwachungsvorrichtung (102) verbunden ist; wobei jede der mehreren Aufzeichnungsvorrichtungen (104) in einem Überwachungsbereich mit nicht überlappenden Sichtfeldern (FOV) angeordnet ist, um den gesamten Überwachungsbereich zu überwachen;
    Verfolgen (Tracking) des mindestens einen menschlichen Skeletts innerhalb des Sichtfelds (FOV) der ersten Skelettaufzeichnungsvorrichtung (104) durch den Prozessor (110), wobei das Tracking das Bestimmen einer Bewegungsrichtung des mindestens einen menschlichen Skeletts und das Extrahieren von Skelettdaten, die sich auf das mindestens eine menschliche Skelett beziehen, das von der ersten Skelettaufzeichnungsvorrichtung (104) erfasst wird, umfasst;
    Übertragen einer Nachricht durch den Prozessor (110) an den Rest der Vielzahl von Skelettaufzeichnungsvorrichtungen (104), falls sich kein menschliches Skelett in dem Sichtfeld der ersten Skelett-Aufzeichnungsvorrichtung (104) aus der Vielzahl von Aufzeichnungsvorrichtungen (104) befindet, um entsprechende Infrarot (IR)-Sensoren in einem Rundlauf-Verfahren ("Round-Robin") ein- und auszuschalten;
    bei Detektieren des mindestens einen menschlichen Skeletts an einem der Ränder des Sichtfeldes (FOV) des ersten Aufzeichnungsgerätes (104), Identifizieren, durch den Prozessor (110), einer oder mehrerer zweiter Skelettaufzeichnungsvorrichtungen (104) auf der Grundlage einer Bewegungsrichtung des mindestens einen menschlichen Skeletts vom Gesichtsfeld (FOV) der ersten Skelettaufzeichnungsvorrichtung (104) zu einem Gesichtsfeld (FOV) der einen oder mehreren zweiten Skelettaufzeichnungsvorrichtungen (104); und
    basierend auf der Identifizierung, Benachrichtigen der einen oder mehreren zweiten Skelettaufzeichnungsvorrichtungen (104) durch den Prozessor (110), um die entsprechenden Infrarot (IR)-Sensoren zu aktivieren.

2. Verfahren nach Anspruch 1, weiter umfassend: Kompression der Skelettdaten der Skelettaufzeichnungsvorrichtung (104) durch den Prozessor (110), wobei die komprimierten Skelettdaten zur Identifizierung von Individuen analysiert werden.

3. Verfahren nach Anspruch 2, ferner umfassend das Übertragen der komprimierten Skelettdaten durch den Prozessor (110) an einen Backend-Server (108), wobei die Identifikation von Individuen auf dem Backend-Server (108) durchgeführt wird.

4. Verfahren nach Anspruch 2, wobei die Identifizierung von Individuen im Überwachungssystem (102) durchgeführt wird.

5. Verfahren nach Anspruch 2, wobei die Skelettdaten durch eine verlustbehaftete Kompressionstechnik komprimiert werden, wobei die verlustbehaftete Kompressionstechnik auf die Skelettdaten eine Tschebyscheff-Transformation/Discrete Chebyshev Transform (DCT) durchführt und statistische Eigenschaften der Skelettdaten zur Durchführung einer Personenidentifikation mit vordefinierter Genauigkeit beibehält.

6. Verfahren nach Anspruch 2, wobei das Identifizieren von Individuen umfasst:

Abrufen von dreidimensionalen (3D) Skelettgelenkkoordinaten aus den Skelettdaten;
Zusammenfassen der Koordinaten des 3D-Skelettgelenks gemäß Zeitstempeln im Zeitverschachtelungsmodus zum Erhalten eines natürlichen Laufmusters eines Individuums;
Extrahieren einer Vielzahl von Gangmerkmalen des Individuums für jeden der einen oder mehreren Gangzyklen aus den 3D-Skelettverbindungskoordinaten der Skelettdaten; und
Identifizieren des Individuums basierend auf der Mehrzahl von Gangmerkmalen.

7. Verfahren nach Anspruch 1, wobei jeder der Vielzahl von Skelettaufzeichnungsvorrichtungen (104) auf der Grundlage einer Erkennungswahrscheinlichkeit des mindestens einen menschlichen Skeletts durch jede der Vielzahl von Skelettaufzeichnungsvorrichtungen (104) ein Gewicht zugeordnet ist.

8. Verfahren nach Anspruch 8, wobei jede der Vielzahl von Skelettaufzeichnungsvorrichtungen (104) über eine vordefinierte Zeitspanne in Ermangelung des Nachweises des mindestens einen menschlichen Skeletts aktiv bleibt und wobei der Zeitraum festgelegt ist entsprechend dem Gewicht, das jedem der Mehrzahl von Skelettaufzeichnungsvorrichtungen (104) zugewiesen ist.

9. Verfahren nach Anspruch 1, wobei das Verfolgen (Tracking) des mindestens einen menschlichen Skeletts durch eine Kalman-Filtertechnik durchgeführt wird.

10. Überwachungssystem (102), umfassend:

einen Prozessor (110);
ein Aktivierungsmodul (120), das mit dem Prozessor (110) gekoppelt ist, um das Vorhandensein von mindestens einem menschlichen Skelett in einem Sichtfeld (FOV) einer ersten Skelett-Aufzeichnungsvorrichtung (104) von einer Vielzahl von Skelettaufzeichnungsvorrichtungen (104) zu erkennen;
wobei jede der Vielzahl von Skelettaufzeichnungsvorrichtungen (104) mit einer separaten Überwachungsvorrichtung (102) verbunden ist; wobei jede der mehreren Skelettaufzeichnungsvorrichtungen (104) in einem Überwachungsbereich mit nicht überlappenden Sichtfeldern (FOV) angeordnet ist, die den gesamten Überwachungsbereich überwachen; und
eine Nachricht durch den Prozessor (110) an den Rest der Vielzahl von Skelettaufzeichnungsvorrichtungen (104) zu übertragen, falls sich kein menschliches Skelett in dem Sichtfeld der ersten Skelettaufzeichnungsvorrichtung (104) aus der Vielzahl von Aufzeichnungsvorrichtungen (104) befindet, um entsprechende Infrarot (IR) - Sensoren in einem Rundlauf-Verfahren ("Round-Robin") ein- und auszuschalten bei Detektieren des mindestens einen menschlichen Skeletts an einem der Ränder des Sichtfeldes (FOV) des ersten Aufzeichnungsgerätes (104);
und ein Trackingmodul (122), das mit dem Prozessor (110) gekoppelt ist, um das mindestens eine menschliche Skelett innerhalb des Sichtfelds (FOV) der ersten Skelett-Aufzeichnungsvorrichtung (104) zu erfassen, wobei das Verfolgen (Tracking) das Bestimmen einer Bewegungsrichtung des mindestens einen menschlichen Skeletts und das Extrahieren von Skelettdaten betreffend dem mindestens einen menschlichen Skelett umfasst, das durch die erste Skelettaufzeichnungsvorrichtung (104) erfasst worden ist; und
ein oder mehrere zweite Skelettaufzeichnungsvorrichtungen (104) auf der Grundlage einer Bewegungsrichtung des mindestens einen menschlichen Skeletts zu identifizieren vom Gesichtsfeld (FOV) der ersten Skelettaufzeichnungsvorrichtung (104) zu einem Gesichtsfeld (FOV) der einen oder mehreren zweiten Skelettaufzeichnungsvorrichtungen (104);
basierend auf der Identifizierung, eine oder mehrere zweiter Skelettaufzeichnungsvorrichtungen (104) zu benachrichtigen, um die entsprechenden Infrarot (IR)-Sensoren zu aktivieren.

11. Überwachungssystem (102) nach Anspruch 11 (?), ferner aufweisend ein Kompressionsmodul (124), das mit dem Prozessor (110) gekoppelt ist, um die Skelettdaten durch eine verlustbehaftete Kompressionstechnik zu komprimieren und die komprimierten Daten an einen Backend-Server (108) zur Identifizierung von Individuen zu übertragen.

12. Überwachungssystem (102) nach Anspruch 11, wobei jede der Vielzahl von Skelettaufzeichnungsvorrichtungen (104) für eine vordefinierte Zeitspanne in Ermangelung des Nachweises des mindestens einen menschlichen Skeletts aktiv bleibt und wobei der Zeitraum festgelegt ist entsprechend dem Gewicht, das jeder der Mehrzahl von Skelettaufzeichnungsvorrichtungen (104) zugewiesen ist.

13. Nicht-transitorisches computerlesbares Medium, auf dem ein Computerprogramm zum Ausführen eines Verfahrens ausgeführt ist, umfassend:

Detektieren der Anwesenheit von mindestens einem menschlichen Skelett in einem Sichtfeld (FOV) einer ersten Skelettaufzeichnungsvorrichtung (104) durch einen Prozessor (110) eines Überwachungssystems von einer Vielzahl von Aufzeichnungsgeräten (104); wobei jede der Vielzahl von Skelettaufzeichnungsvorrichtungen (104) mit einer separaten Überwachungsvorrichtung (102) verbunden ist; wobei jede der mehreren Skelettaufzeichnungsvorrichtungen (104) in einem Überwachungsbereich mit nicht überlappenden Sichtfeldern (FOV) angeordnet ist, um den gesamten Überwachungsbereich zu überwachen; und

Verfolgen (Tracking) des mindestens einen menschlichen Skeletts innerhalb des Sichtfelds (FOV) der ersten Skelettaufzeichnungsvorrichtung (104) durch den Prozessor (110), wobei das Tracking das Bestimmen einer Bewegungsrichtung des mindestens einen menschlichen Skeletts und das Extrahieren von Skelettdaten, die sich auf das mindestens eine menschliche Skelett beziehen, das von der ersten Skelettaufzeichnungsvorrichtung (104) erfasst wird, umfasst;

Übertragen einer Nachricht an den Rest der Vielzahl von Skelettaufzeichnungsvorrichtungen (104) durch den Prozessor (110) falls sich kein menschliches Skelett in dem Sichtfeld der ersten Skelettaufzeichnungsvorrichtung (104) aus der Vielzahl von Aufzeichnungsvorrichtungen (104) befindet, um entsprechende Infrarot (IR) - Sensoren in einem Rundlauf-Verfahren ("Round-Robin") ein- und auszuschalten;

bei Detektieren des mindestens einen menschlichen Skeletts an einem der Ränder des Sichtfeldes (FOV) des ersten Aufzeichnungsgerätes (104) Identifizieren einer oder mehrerer zweiter Skelettaufzeichnungsvorrichtungen (104) durch den Prozessor (110) auf der Grundlage einer Bewegungsrichtung des mindestens einen menschlichen Skeletts vom Sichtfeld (FOV) der ersten Skelettaufzeichnungsvorrichtung (104) zu einem Sichtfeld (FOV) der einen oder mehreren zweiten Skelettaufzeichnungsvorrichtungen (104); und

basierend auf der Identifizierung, Benachrichtigen durch den Prozessor (110) der einen oder mehreren zweiten Skelettaufzeichnungsvorrichtungen (104) um die entsprechenden Infrarot-(IR)-Sensoren zu aktivieren.

**Revendications**

1. Procédé pour surveiller un mouvement en utilisant une pluralité de dispositifs d'enregistrement de squelette (104), le procédé comprenant les étapes consistant à :

détecter, par un processeur (110) d'un système de surveillance (102), la présence d'au moins un squelette humain dans un champ de vision (ou FOV, "Field Of View") d'un premier dispositif d'enregistrement de squelette (104) parmi la pluralité de dispositifs d'enregistrement (104), dans lequel chacun de la pluralité de dispositifs d'enregistrement de squelette (104) est connecté à un dispositif de surveillance séparé (102), dans lequel chacun de la pluralité de dispositifs d'enregistrement de squelette (104) est placé dans une zone de surveillance avec un champ de vision (FOV) sans chevauchement en surveillant la zone de surveillance complète ;

suivre, par le processeur (110), ledit au moins un squelette humain à l'intérieur du champ de vision du premier dispositif d'enregistrement de squelette (104), dans lequel le suivi inclut la détermination d'une direction de traversée dudit au moins un squelette humain et l'extraction de données de squelette appartenant audit au moins un squelette humain suivi par le premier dispositif d'enregistrement de squelette (104) ;

transmettre, par le processeur (110), un message au reste de la pluralité de dispositifs d'enregistrement de squelette (104), en cas d'absence d'un squelette humain dans le champ de vision du premier dispositif d'enregistrement de squelette (104) parmi la pluralité de dispositifs d'enregistrement (104) afin de commuter en marche et à l'arrêt des capteurs infrarouges (IR) correspondants tour à tour ;

dans le cas de la détection dudit au moins un squelette humain provenant de l'un des bords du champ de vision (FOV) du premier dispositif d'enregistrement (104) :

l'identification, par le processeur (110) d'un ou plusieurs seconds dispositifs d'enregistrement de squelette (104) sur la base de la direction de traversée dudit au moins un squelette humain depuis le champ de vision du premier dispositif d'enregistrement de squelette (104) vers le champ de vision desdits un ou plusieurs seconds dispositifs d'enregistrement de squelette (104) ; et

en se basant sur l'identification, la notification, par le processeur (110), auxdits un ou plusieurs seconds dispositifs d'enregistrement de squelette (104), d'activer des capteurs infrarouges (IR) correspondants.

**2.** Procédé selon la revendication 1, comprenant en outre :
la compression, par le processeur (110), des données de squelette du dispositif d'enregistrement de squelette (104), dans lequel les données de squelette comprimées sont analysées pour identifier des individus.

**3.** Procédé selon la revendication 2, comprenant en outre la transmission, par le processeur (110), des données de squelette comprimées à un serveur dorsal (108), dans lequel l'identification des individus est exécutée au niveau du serveur dorsal (108).

**4.** Procédé selon la revendication 2, dans lequel l'identification des individus est exécutée au niveau du système de surveillance (102).

**5.** Procédé selon la revendication 2, dans lequel les données de squelette sont comprimées par une technique de compression avec perte, dans lequel la technique de compression avec perte effectue une transformation dite "Discrète Chebyshev Transform" (DCT) sur les données de squelette et préserve les propriétés statistiques des données de squelette pour effectuer l'identification de personnes avec une précision prédéfinie.

**6.** Procédé selon la revendication 2, dans lequel l'identification des individus comprend :

la récupération tridimensionnelle (3D) de coordonnées d'articulation de squelette à partir des données de squelette ;
l'agrégation des coordonnées d'articulation de squelette 3D en accord avec des données d'horodatage en mode avec entrelacement temporel pour obtenir un motif de marche naturelle d'un individu ;
l'extraction d'une pluralité de caractéristiques de démarche de l'individu, pour chacun d'un ou plusieurs cycles de démarche, à partir des coordonnées d'articulation de squelette 3D sur les données de squelette ; et
identification de l'individu en se basant sur la pluralité de caractéristiques de démarche.

**7.** Procédé selon la revendication 1, dans lequel chacun de la pluralité de dispositifs d'enregistrement de squelette (104) est associé à une pondération basée sur une probabilité de détection dudit au moins un squelette humain par chacun de la pluralité de dispositifs d'enregistrement de squelette (104).

**8.** Procédé selon la revendication 7, dans lequel chacun de la pluralité de dispositifs d'enregistrement de squelette (104) reste actif pendant une période temporelle prédéfinie en l'absence de la détection dudit au moins un squelette humain, et dans lequel la période temporelle est définie en accord avec la pondération attribuée à chacun de la pluralité de dispositifs d'enregistrement de squelette (104).

**9.** Procédé selon la revendication 1, dans lequel le suivi dudit au moins un squelette humain est effectué par une technique avec filtre de Kalman.

**10.** Système de surveillance (102) comprenant :

un processeur (110) ;
un module d'activation (120), couplé au processeur (110), pour :

détecter la présence d'au moins un squelette humain dans un champ de vision (FOV) d'un premier dispositif d'enregistrement de squelette (104) parmi une pluralité de dispositifs d'enregistrement de squelette (104), dans lequel chacun de la pluralité de dispositifs d'enregistrement de squelette (104) est connecté à un dispositif de surveillance séparé (102), dans lequel chacun de la pluralité de dispositifs d'enregistrement de squelette (104) est placé dans une zone de surveillance sans chevauchement du champ de vision (FOV) en surveillant la zone de surveillance complète ; et
transmettre, par le processeur (110), un message au reste de la pluralité de dispositifs d'enregistrement de squelette (104), en cas d'absence d'un squelette humain dans le champ de vision du premier dispositif d'enregistrement de squelette (104) parmi la pluralité de dispositifs d'enregistrement (104) pour mettre en marche et à l'arrêt des capteurs infrarouges correspondants (IR) tour à tour,

en cas de détection d'au moins un squelette humain apparaissant à l'un des bords du champ de vision (FOV) du premier dispositif d'enregistrement (104) ;
un module de suivi (122), couplé au processeur (110), pour :

suivre ledit au moins un squelette humain à l'intérieur du champ de vision du premier dispositif d'enregistrement de squelette (104), ledit suivi incluant la détermination d'une direction de traversée dudit au moins un squelette humain et l'extraction de données de squelette appartenant audit au moins un squelette humain suivi par le premier dispositif d'enregistrement de squelette (104) ; et

identifier un ou plusieurs seconds dispositifs d'enregistrement de squelette (104), sur la base de la direction de traversée dudit au moins un squelette humain depuis le champ de vision du premier dispositif d'enregistrement de squelette (104) jusqu'à un champ de vision desdits un ou plusieurs seconds dispositifs d'enregistrement de squelette (104) ; et

en se basant sur l'identification, notifier un ou plusieurs seconds dispositifs d'enregistrement de squelette (104) d'activer des capteurs infrarouges correspondant (IR).

11. Système de surveillance (102) selon la revendication 11, comprenant en outre un module de compression (124), couplé au processeur (110) pour comprimer les données de squelette en utilisant une technique de compression avec perte ; et pour transmettre les données comprimées à un serveur dorsal (108) pour l'identification d'un individu.

12. Système de surveillance (102) selon la revendication 11, dans lequel chacun de la pluralité de dispositifs d'enregistrement de squelette (104) est actif pendant une période temporelle prédéfinie en l'absence de détection dudit au moins un squelette humain, et dans lequel la période temporelle est définie en accord avec la pondération attribuée à chacun de la pluralité de dispositifs d'enregistrement de squelette (104).

13. Support non transitoire lisible à l'ordinateur dans lequel est incorporé un programme d'ordinateur pour mettre en oeuvre un procédé comprenant les étapes consistant à :

détecter, par un processeur (110) d'un système de surveillance (102), la présence d'au moins un squelette humain dans un champ de vision (FOV) d'un premier dispositif d'enregistrement de squelette (104) parmi une pluralité de dispositifs d'enregistrement (104), dans lequel chacun de la pluralité de dispositifs d'enregistrement de squelette (104) est connecté à un dispositif de surveillance séparé (102), dans lequel chacun de la pluralité de dispositifs d'enregistrement de squelette (104) est placé dans une zone de surveillance avec des champs de vision (FOV) sans chevauchement en surveillant la zone de surveillance complète ;

suivre, par le processeur (110), ledit au moins un squelette humain à l'intérieur du champ de vision du premier dispositif d'enregistrement de squelette (104), ledit suivi incluant la détermination d'une direction de traversée dudit au moins un squelette humain et l'extraction de données de squelette appartenant audit au moins un squelette humain suivi par le premier dispositif d'enregistrement de squelette (104) ;

transmettre, par le processeur (110), un message au reste de la pluralité de dispositifs enregistrement de squelette (104), en cas d'absence d'un squelette humain dans le champ de vision du premier dispositif d'enregistrement de squelette (104) parmi la pluralité de dispositifs d'enregistrement (104) afin de commuter en marche et à l'arrêt des capteurs correspondants à infrarouge (IR) tour à tour ;

en cas de détection dudit au moins un squelette humain apparaissant à l'un des bords du champ de vision (FOV) du premier dispositif d'enregistrement (104),

identifier, par le processeur (110), un ou plusieurs seconds dispositifs d'enregistrement de squelette (104) en se basant sur une direction de traversée dudit au moins un squelette humain depuis le champ de vision du premier dispositif d'enregistrement de squelette (104) jusqu'à un champ de vision desdits un ou plusieurs seconds dispositifs d'enregistrement de squelette (104) ; et

en se basant sur l'identification, notifier, par le processeur (110) auxdits un ou plusieurs seconds dispositifs d'enregistrement de squelette (104) d'activer des capteurs infrarouges correspondants (IR).

MONITORING SYSTEM 102

PROCESSOR(S) 110    INTERFACE(S) 112

MEMORY 114

MODULE(S) 116

ACTIVATION MODULE 120

TRACKING MODULE 122

COMPRESSION MODULE 124

OTHER MODULE(S) 126

DATA 118

WEIGHTS DATA 128

COORDINATES DATA 130

OTHER DATA 132

100

102-2

102-N

104-2

104-N

104-1

102-1

NETWORK 106

108

# Figure 1

200

202
RECEIVE A MESSAGE FROM AN ACTIVE SKELETON RECORDING
DEVICE TO TURN ON INFRARED (IR) CAMERA

204
SEARCH FOR AT LEAST ONE HUMAN SKELETON

206
DETECTED THE
AT LEAST ONE HUMAN
SKELETON?

No

NO

208
HAS THE IR CAMERA
TIMED OUT?

YES

210
TURN OFF THE IR
CAMERA

YES

212
EXTRACT SKELETON DATA FROM THE AT LEAST ONE HUMAN
SKELETON

214
TRACK DIRECTION OF TRAVERSAL OF THE AT LEAST ONE
HUMAN SKELETON

216
IS THE AT LEAST
ONE HUMAN SKELETON
OUT OF VIEW?

No

218
SET THE TIMER TO
INFINITY

YES

220
TURN OFF THE IR CAMERA AND SEND A MESSAGE TO ONE OR
MORE NEXT SKELETON RECORDING DEVICES TO SWITCH ON
THE IR CAMERA

222
COMPRESS THE SKELETON DATA AND SHARE WITH A BACKEND
SERVER FOR IDENTIFICATION OF INDIVIDUALS

Figure 2(a)

250

252
SPLIT DATA STREAM INTO EQUAL LENGTH DATA BLOCKS

254
SET DATA BLOCKS TO ZERO MEAN, NORMALIZE BETWEEN -1 TO +1, MULTIPLY BY 127

256
PERFORM DISCRETE CHEBYSHEV TRANSFORM (DCT) TO EACH DATA BLOCK

258
OMIT FIRST COMPONENT OF CHEBYSHEV COEFFICIENT

260
QUANTIZING NON-ZERO COEFFICIENTS AND TRANSMIT IN THE SUBSEQUENT IMAGES

262
GENERATE CONTROL WORD REPRESENTING COEFFICIENT LOCATION

264
ENCODING A DATA BLOCK

266
YES — ARE THERE MORE BLOCKS?

NO

268
ARRANGE DATA BLOCK IN PACKET FOR TRANSMISSION

# Figure 2(b)

| 00011010110 | 001001 | 110010011 | 0010100101011110000010000................00101000111 |
|---|---|---|---|

11 bit mean value ← → | 6 bit length specifier (Represents the number 9) | 9 bit control word | 80 bit coefficients (9+1 coefficients with 8 bits)

# Figure 2(c)

Figure 3(a)

300-2

(a)

(b)

# Figure 3(b)

300-3

(a)

(b)

# Figure 3(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Algorithms for cooperative multisensor surveillance. **COLLINS R T.** PROCEEDINGS OF THE IEEE. IEEE, 01 October 2001, vol. 89